Europäisches Patentamt

European Patent Office

Office européen des brevets

(19)

(11) Publication number: **0 300 659 B1**

# EUROPEAN PATENT SPECIFICATION

(12)

(45) Date of publication of patent specification: **07.10.92**   (51) Int. Cl.5: **B29C 41/22**

(21) Application number: **88306304.2**

(22) Date of filing: **11.07.88**

(54) **A method for producing a molded article having colored features.**

(30) Priority: **16.07.87 US 74354**

(43) Date of publication of application:
**25.01.89 Bulletin 89/04**

(45) Publication of the grant of the patent:
**07.10.92 Bulletin 92/41**

(84) Designated Contracting States:
**DE ES FR GB IT**

(56) References cited:
**EP-A- 0 186 285**
**EP-A- 0 223 359**
**GB-A- 1 422 730**
**US-A- 4 244 993**
**US-A- 4 610 620**

(73) Proprietor: **DAVIDSON TEXTRON INC.**
**Industrial Park**
**Dover New Hampshire 03820(US)**

(72) Inventor: **Brault, Alfred F.**
**Box 610**
**South Berwick Maine 03908(US)**
Inventor: **Gray, John D.**
**Middleton Road**
**New Durham New Hampshire 03855(US)**

(74) Representative: **Frost, Dennis Thomas et al**
**WITHERS & ROGERS 4 Dyer's Buildings Holborn**
**London, EC1N 2JT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 300 659 B1

## Description

This invention relates to a method for forming thin walled hollow shells for products made from thermoplastic material, and more particularly, to a method for manufacturing such shells to have decorative features formed *in situ* according to the preambles of the independent claims.

The use of thin walled plastic shells for products have included a cast shell of thermoplastic material with a decorative feature formed therein. One example is set forth in US-A-4,610,620, which discloses apparatus for moulding plural coloured plastic hollow shells by a process in which a decorative pinstripe is formed as an integrally bonded joint between first and second segments of the shell. The joint between the shell components is used to replace a mechanical connection therebetween and to provide a pinstripe decorative feature in the shell component. However, the decorative pinstripe is formed only along the joint line of the joined parts and is not formed *in situ* in a base layer.

US-A-4,562,025 discloses a mould method and apparatus for multicoloured plastic shells which have first and second coloured segments on the cast shell portions of the finished product. However, there are no decorative features formed *in situ* on the cast shell components of the trim part.

US-A-4,562,032 discloses a method for forming grain coverings on reaction injection moulded articles. Such grained shells are formed, in some cases, to have an integrally formed stitching feature around the perimeter thereof to provide an appearance of stitched materials.

While the above patens disclose shells cast from thermoplastic material which include decorative colour and trim features, they do not disclose a method for providing decorative features such as coloured lettering or coloured stitching *in situ* on an eye discernible surface of the finished article embodying the cast shell formed by the method of depositing thermoplastic material on a heated mould surface.

Various other proposals have been suggested for providing decorative features on such plastic products, however, the problem with prior approaches has been that they require separate connectors or adhesives to provide the decorative features on the outer surface of the shell.

In order to overcome the technical problems defined above, the process of the present invention is characterised by the steps set out in the features of independent claims 1 and 5. Preferred features of the invention are defined in the dependent claims.

The defined process is advantageous because separate connectors or the use of adhesive or other bonding materials is not required to secure the decorative features in place. A further advantage is obtained because the same tooling is used to cast the base layer of material for the outer shell surface as is used for producing the decorative features. The process of the invention is particularly suitable for manufacturing plastics trim components for use in automobiles wherein a coloured decorative feature can be formed by the use of the same tooling used for producing a shell of thermoplastics material thereby eliminating the need for separate fasteners and adhesive connectors for securing decorative features on such parts.

Some embodiments of the invention will now be described by way of example only, with reference to the accompanying diagrammatic drawings, in which:

Figure 1 is a diagrammatic view of a product made by use of the present invention;

Figure 2 is a perspective view of mould tooling with a covering of thermoplastics material being shown in exploded relationship with respect thereto;

Figure 3 is an enlarged sectional view taken along the line 3-3 of Figure 2;

Figure 4 is an enlarged perspective view sectioned on the line 4-4 of Figure 2 looking in the direction of the arrows;

Figure 5 is a view of a separated mould and a powder box for casting a layer of thermoplastic material against the mould surface;

Figure 6 is a view of a mould and a joined powder box for casting a thermoplastic layer;

Figure 7 is a view of the joined mould and powder box following casting of the thermoplastic layer;

Figure 8 is a view of a separate mould with retained decorative segments and powder box having the material for forming a base layer;

Figure 9 is a view of the base layer of material cast against the mould and the retained segments;

Figure 10 is an enlarged, sectional view of the bonded interface between the base layer and a decorative segment;

Figure 11 is a flow chart of the process followed by use of the tooling showing in Figures 5 through 10;

Figure 12A is a perspective view of a fragment of mould having a decorative stitch feature recessed therein, and Figure 12B shows a fragment of a product with the stitch feature thereon;

Figure 13 is a flow chart of a process used in forming a decorative plastic part by use of the tooling in Figure 12; and

Figure 14A-14C are diagrammatic views of tooling used to form a pinstripe feature by use of a step including distributing liquid plastisol.

The process of the present invention will be described with reference to production of a plastic shell for use as an automotive trim product with it being understood that other plastic products require *in situ* decorative feature therein are equally suitable for manufacturing by the process of the present invention.

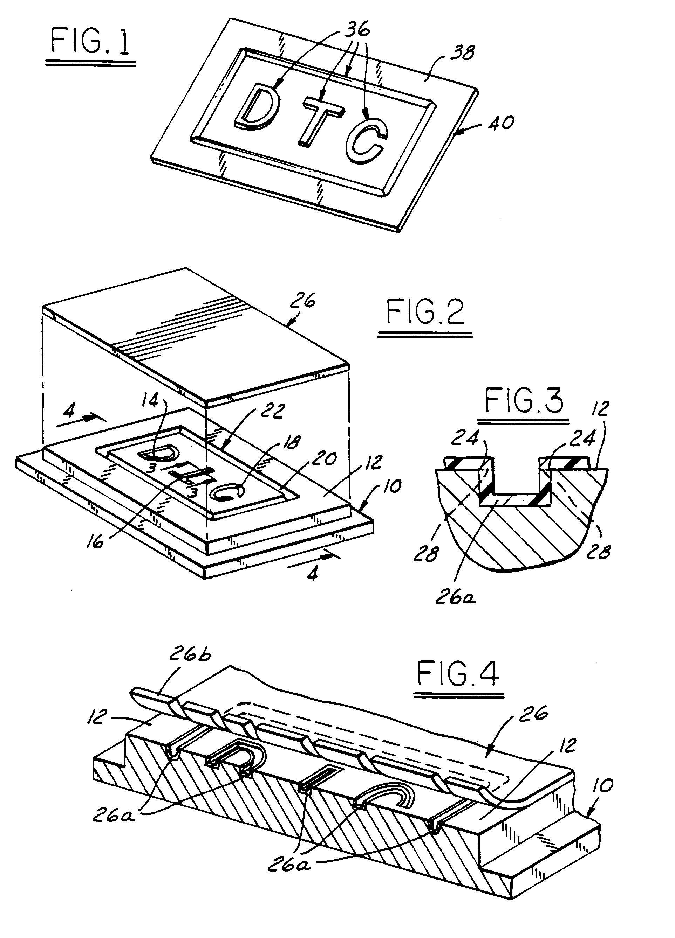

Referring to Figure 2, a mould tool 10 is illustrated having a mould surface 12 thereon, a plurality of recesses 14,16,18 and 20 forming a logo 22 in the form of lettering with a boundary line. The recesses 14,16,18 and 20, as best shown in Figure 3, each have a sharp break line 24 at the front interfacing edge to the mould surface 12. While the logo is shown as a part having a reduced planar extent, it should be understood that it can be formed on an extended surface mould of the type used to form larger plastic products such as luggage shells or instrument panel shells or other large area plastic products.

The improved process includes heating the mould tool 10. It is then covered with a covering 26 of thermoplastic material which includes segments 26a located in each of the recesses 14-20 and a thin membrane section 26b that covers the logo portion 22 of the mould surface 12.

The segments 26a are trapped in the recesses 14-20 and are retained therein during a stripping step which is shown in Figure 4. When the thin membrane 26b is stripped from the mould surface 12, the membrane will tear along tear lines 28 at the break lines 24. Consequently, the covering 26 is totally removed from the tool to leave the trapped segments 26a in place therein.

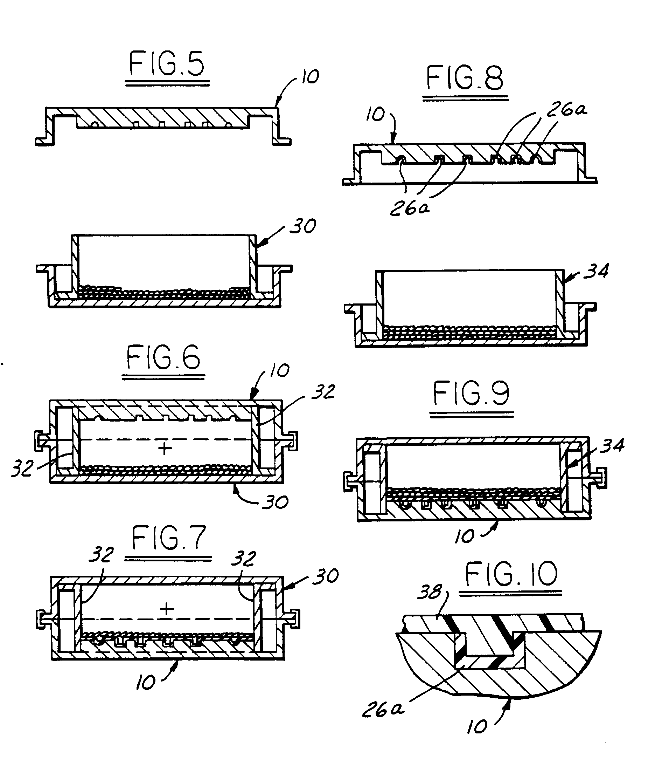

The mould tool 10 is used in association with a powder casting box 30 which is joined to the mould tool 10 as shown in Figure 6 and rotated in Figure 7 to cause particles of thermoplastic material to be distributed so as to cover the full surface of the normal mould surface 12 which are sealed by a seal member 32 on the powder casting box 30.

The tool 10 with the retained segments 26a as shown in Figure 8, is then associated with a second powder casting box 34 having a different colour thermoplastic material therein which is distributed when the powder casting box 34 is inverted with respect to the mould tool 10 as shown in Figure 10 to cover the remainder of the normal mould surface 12. This fills the trapped segments 26a so as to be bonded thereto.

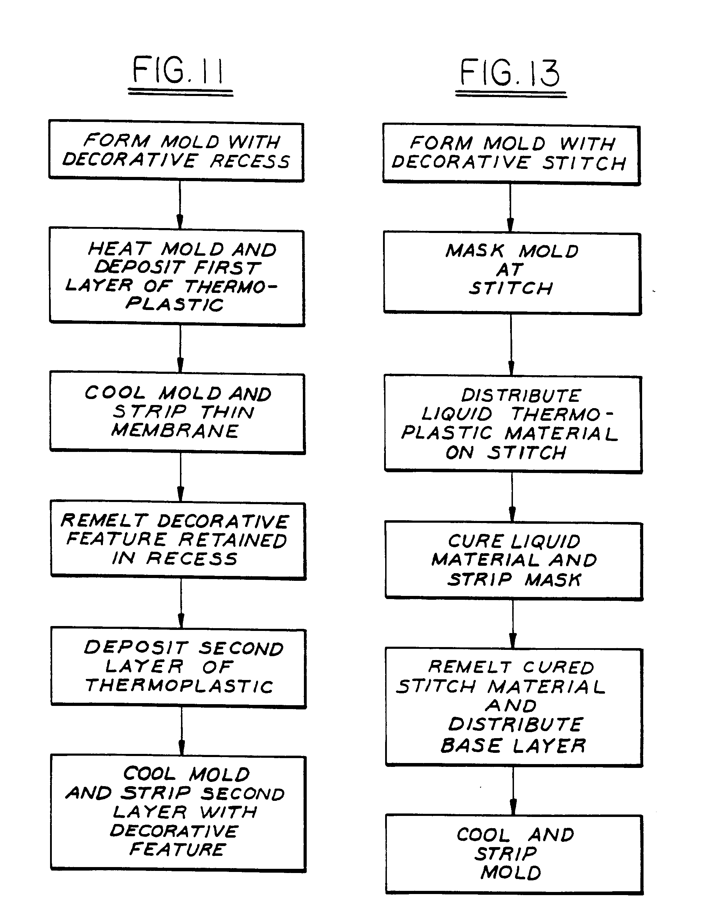

More particularly, as outlined in Figure 11, the process includes the steps of forming a mould of the type shown in Figures 2 through 4 with decorative recesses therein. The mould is preheated to a temperature at which thermoplastic material will melt or cure thereon. The heated mould is connected to a powder box of the type shown in Figures 5-7 and distributed as a covering of material against the normal mould surface 12.

The mould tool 10 is then cooled and the covering 26 is stripped as shown in Figure 4 to remove the thin membrane 26b at the sharp break lines 24 along the tear lines 28.

The next step of the process is to remelt the retained segments 26a and cast a base layer 38 of thermoplastic material against the mould surface 12. After the complete shell has been cast, the mould is cooled and the mould is stripped to form an *in situ* decorative feature 36 on a substrate (base layer) 38 of a part 40. The decorative feature 36 is raised from the substrate 38 as shown in Figure 1. It has a contrasting colour to that of the substrate 38.

The thin membrane 26b in one working embodiment is of the order of .008 inches (0.2mm) thick. The stripping of covering 26 while retaining the thermoplastic segments 26a in the recesses is made possible because of the design of the reverse lettering which leaves the sharp break line 24 along the front interfacing edge of the recesses at the mould surface 12.

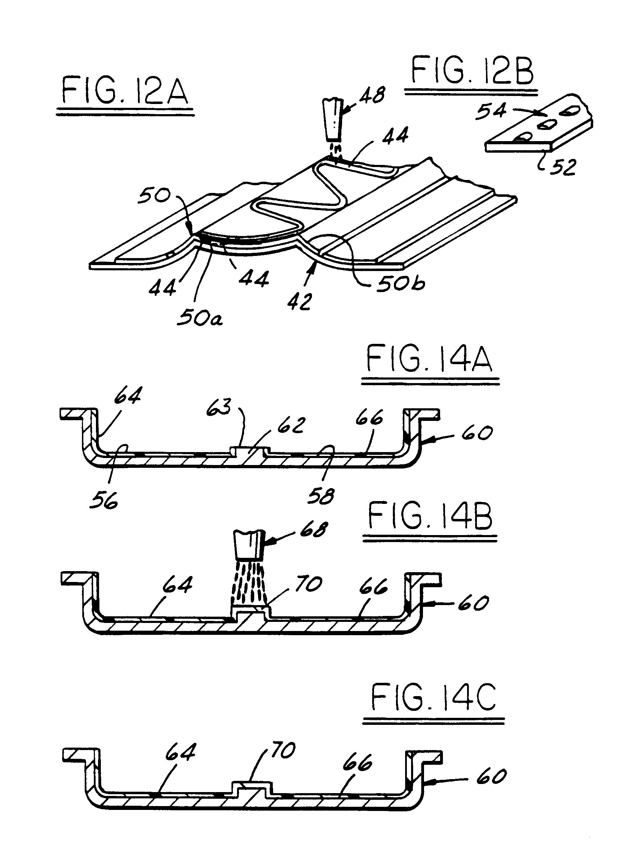

The distribution of at least one of the layers of thermoplastic material can be accomplished by application of a liquid dispersion of a thermoplastic material against the heated mould surface. Thus as shown in a mould tool 42 has a stitch recess 44. A first layer of sprayed plastisol is applied on the stitch recess 44. A suitable spray apparatus 48 is utilized to direct a liquid dispersion of thermoplastic material as a cover 50 over the stitch recess 44. The cover 50 fills the recess 44 with retained segments 50a and covers mould 42 with a membrane 50b. The mould tool 42 is heated to a desired cure temperature for a predetermined period of time and then cooled and excess material is removed from the mould by stripping the membrane 50b therefrom. The mould tool 42 is then reheated to remelt or partially remelt the segments 50a of cover 50 trapped in the stitch recess 44. Then the mould is connected to a suitable distribution system for casting dry powder thermoplastic material across the entire mould which has a colour contrasting to the partially remelted segments 50a. The base layer of cast material melts on the mould and is bonded to segments 50a. The mould tool 42 is cooled and the base layer, along with the trapped stitch material in the recesses 42, is stripped from the mould. The result is a thermoplastic product having a base layer 52 of material of one colour having an *in situ* integrally formed stitch pattern 54 formed on the surface thereof in colour contrasting relationship thereto as shown in Figure 12B.

The liquid dispersion method can also be used in conjunction with parts that provide a pinstripe of a type discussed in US-A-4,610,620. In this process, a two compartment tool is connected to a powder distribution box that has a divider wall therein which separates first and second compartment. The compartments are provided to contain thermoplastic powder to be distributed against mould surfaces 56,58 on a mould tool 60, which are separated by a divider 62. In this embodiment, the divider has a surface 63 thereon which will form a pinstripe in a finished article. When the mould tool and powder box are joined, a gasket covers the pin stripe surface and layers of material 64,66 are cast on the mould surfaces 56,58 as shown in Figure 14B,14C. Thereafter, the tool is separated from the powder box and a liquid plastisol spray apparatus 68 is utilised to distribute a covering 70 of thermoplastic material against the mould surface 63. The covering 70 is cured to bond the cast payers 64,66 to one another and to form a contrasting trim feature therebetween.

**Claims**

1. A process for forming a decorative feature *in situ* in a base layer of a plastics shell made from thermoplastics material cast against a heated tool (10,42) having a mould surface (12) thereon comprising forming a recessed surface (14-20,44) on the mould surface (12) corresponding to a desired decorative feature, characterised in that a sharp breakline (24) is provided between the recessed surface (14-20,44) and the remainder of the mould surface, and in that the method further comprises heating the mould surface (12) depositing a first layer of thermoplastics material to provide a covering (26,50) and melting the covering (26,50) on the recessed surface (14-20,44) and simultaneously forming a thin membrane (26b,50b) on the remainder of the surface (12), cooling the covering (26,50) including the thin membrane (26b,50b) and stripping the thin membrane (26b,50b) from the mould so as to separate it from the covering segment(s) (26a,50a) retained in the recessed surface (14-20,44) at the sharp break line (24), reheating the tool (10,42) to partially remelt the retained covering segment(s) (26a,50a) in the recessed surface (14-20,44), depositing a base layer of thermoplastics material across the full surface of the mould and bonding it to the retained covering segment(s) (26a,50a), and cooling and stripping the bonded thermoplastics material from the mould surface so as to form a shell with a decorative feature defined by the bonded segment(s) (26a,50a) of thermoplastics material *in situ* in the base layer of thermoplastics material.

2. A process according to claim 1, characterised in that the recessed surface (44) defines a stitch feature.

3. A process according to claim 1, characterised in that recessed surface (14,20) defines lettering surrounded by a mould seal shut off surface.

4. A process according to any one of the preceding claims, characterised in that the first layer of thermoplastics material is a colour which contrasts with that of the base layer of thermoplastics material.

5. A process for forming a decorative feature *in situ* in a base layer of plastics material in a shell made from thermoplastics material cast against a heated tool (10,42,60) having a mould surface (12) thereon, the process comprising: forming a surface (14-20,44,63) on the mould surface corresponding to desired decorative feature; providing a sharp break line (24) between the surface (14-20,44,63) and the remainder of the mould surface (56,58); depositing a first layer (26,50,54,66) of thermoplastics material and heating the tool to melt the thermoplastics material on the mould surface; characterised by the steps of: cooling the first layer (26,50,64,66) of material; reheating the heatable tool (10,42,60) to partially remelt the first layer (26,50,64,66) of material; depositing a second layer (70) of thermoplastics material so as to cover at least a portion of the first layer (26,50,64,66) of material and bond the first and second layers; cooling and stripping the first and second layers of thermoplastics material from the mould surface so as to form a shell with a decorative feature defined by the first layer of thermoplastics material *in situ* with the second layer of thermoplastics material.

6. A process according to any one of the preceding claims, characterised in that the first layer (26,50) of thermoplastics material is deposited by spraying a liquid dispersion of the thermoplastics material into the recessed surface (14-20,44) and across a limited contiguous surface of the mould surface; and in that the dispersion is cured prior to stripping.

7. A process according to any one of the preceding claims, characterised in that said first layer of thermoplastics material is deposited as a dry powder on the heated tool.

8. A process according to claim 5, characterised in that said tool (60) is formed to have the decorative surface (63) on a divider (62) between first and second portions (56,58) of the mould surface; one said layer of thermoplastics material being deposited on the divider as a liquid dispersion which is cured to form a decorative feature formed integrally with the other layer (64,66) of thermoplastics material which is deposited on the first and second portions (56,58) of the mould surface.

**Patentansprüche**

1. Verfahren zum Bilden eines dekorativen Musters in situ in einer Basisschicht einer Kunststoffschale aus thermoplastischem Material, das gegen ein erwärmtes Werkzeug (10, 42) mit einer darauf angeordneten Formoberfläche (12) gegossen wird, wobei eine mit Ausnehmungen versehene Oberfläche (14-20, 44) auf der Formoberfläche (12) gebildet wird, die einem gewünschten dekorativen Muster entspricht, dadurch gekennzeichnet, daß eine scharfe Bruchlinie (24) zwischen der mit Ausnehmungen versehenen Oberfläche (14-20, 44) und dem übrigen Teil der Formoberfläche vorgesehen ist, und daß das Verfahren ferner die folgenden Verfahrensschritte aufweist:

Erwärmen der Formoberfläche (12), Ablagerung einer ersten Schicht aus thermoplastischem Material, um eine Bedeckung (26, 50) zur Verfügung zu stellen und Schmelzen der Bedeckung (26, 50) auf der mit Ausnehmungen versehenen Oberfläche (14-20, 44) und gleichzeitiges Ausbilden einer dünnen Membran (26b, 50b) auf dem übrigen Teil der Oberfläche (12), Abkühlen der Bedeckung (26, 50) einschließlich der dünnen Membran (26b, 50b) und Abziehen der dünnen Membran (26b, 50b) von der Form, so daß sie vom bedeckenden Segment bzw. von den bedeckenden Segmenten (26a, 50a), welche in der mit Ausnehmungen versehenen Oberfläche (14-20, 44) zurückgehalten sind, an der scharfen Bruchlinie (24) getrennt wird, Wiedererwärmung des Werkzeugs (10, 42), um das zurückgehaltene Segment bzw. die Segmente (26a, 50a) in der mit Ausnehmungen versehenen Oberfläche (14-20, 44) teilweise wieder zu schmelzen, Aufbringen einer Basisschicht aus thermoplastischem Material über die gesamte Oberfläche der Form und Bindung dieser Schicht an das zurückgehaltene bedeckende Segment bzw. die Segmente (26a, 50a), und Abkühlung und Abziehen des gebundenen thermoplastischen Materials von der Formoberfläche, so daß eine Schale mit einem dekorativen Muster ausgebildet wird, welches durch das gebundene Segment bzw. die gebundenen Segmente (26a, 50a) aus thermoplastischem Material definiert und in situ auf der Basisschicht des thermoplastischen Materials gebildet wird.

2. Verfahren nach Anspruch 1, dadurch gekennzeichnet, daß die mit Ausnehmungen versehene Oberfläche (44) ein nahtförmiges Merkmal bildet.

3. Verfahren nach Anspruch 1, dadurch gekennzeichnet, daß die mit Ausnehmungen versehene Oberfläche (14, 20) einen von einer Formsiegelabschlußoherfläche umgebenen Schriftzug bildet.

4. Verfahren nach einem der vorstehenden Ansprüche, dadurch gekennzeichnet, daß die erste Schicht aus thermoplastischem Material eine Farbe besitzt, die mit der der Basisschicht des thermoplastischen Materials kontrastiert.

5. Verfahren zur Bildung eines dekorativen Musters in situ in einer Basisschicht aus Kunststoff in einer Schale aus thermoplastischem Material, welches gegen ein erwärmtes Werkzeug (10, 42, 60) mit einer Formoberfläche (12) gegossen wird, wobei das Verfahren die folgenden Verfahrensschritte aufweist:

Ausbildung einer Oberfläche (14-20, 44, 63) auf der Formoberfläche, weiche dem gewünschten dekorativen Muster entspricht; Zurverfügungstellung einer scharfen Bruchlinie (24) zwischen der Oberfläche (14-20, 44, 63) und dem übrigen Teil der Formoberfläche (56, 58); Aufbringung einer ersten Schicht (26, 50, 64, 66) aus thermoplastischem Material und Erwärmung des Werkzeuges zum Schmelzen des thermoplastischen Materials auf der Formoberfläche; durch die folgenden Schritte gekennzeichnet:

Abkühlung der ersten Materialschicht (26, 50, 64, 66); Wiedererwärmung des erwärmbaren Werkzeuges (10, 42, 60), um die erste Materialschicht (26, 50, 64, 66) teilweise wieder zu schmelzen; Aufbringung einer zweiten Schicht (70) aus thermoplastischem Material, so daß zumindest ein Teil der ersten Materialschicht (26, 50, 64, 66) bedeckt ist und die ersten und zweiten Schichten aneinander gebunden sind; Abkühlung und Abziehen der ersten und zweiten Schicht aus thermoplastischem Material von der Formoberfläche, so daß eine Schale mit einem dekorativen Muster gebildet wird, welches durch die erste Schicht aus thermoplastischem Material definiert und in situ mit der zweiten Schicht aus thermoplastischem Material gebildet wird.

**6.** Verfahren nach einem der vorstehenden Ansprüche, dadurch gekennzeichnet, daß die erste Schicht (26, 50) aus thermoplastischem Material durch Versprühen einer flüssigen Dispersion des thermoplastischen Materials in die mit Ausnehmungen versehene Oberfläche (14-20, 44) und über eine begrenzte angrenzende Oberfläche der Formoberfläche aufgebracht wird; und daß die Dispersion vor dem Abziehen ausgehärtet wird.

**7.** Verfahren nach einem der vorstehenden Ansprüche, dadurch gekennzeichnet, daß die erste Schicht aus thermoplastischem Material als trockenes Pulver auf das erwärmte Werkzeug aufgebracht wird.

**8.** Verfahren nach Anspruch 5, dadurch gekennzeichnet, daß das Werkzeug (60) mit der dekorativen Oberfläche (63) auf einem Teiler (62) zwischen ersten und zweiten Bereichen (56, 58) der Formoberfläche ausgebildet ist, wobei eine Schicht aus thermoplastischem Material auf dem Teiler als flüssige Dispersion aufgebracht wird, welche ausgehärtet wird, um ein dekoratives Muster zu bilden, das einteilig mit der anderen Schicht (64, 66) aus thermoplastischem Material, welche auf den ersten und zweiten Bereichen (56, 58) der Formoberfläche aufgebracht ist, gebildet ist.

**Revendications**

**1.** Procédé de formation d'un motif décoratif *in situ* dans une couche de base d'un voile plastique obtenu par application d'un matériau thermoplastique contre un outil chauffé (10,42) comportant une surface de moulage (12), procédé comprenant la formation d'une surface en retrait (14-20,44) sur la surface de moulage (12) correspondant à un motif décoratif voulu, caractérisé en ce qu'une ligne de rupture brutale (24) entre la surface en retrait (14-20,44) et le reste de la surface de moulage est obtenue, et en ce que le procédé comprend en outre :
  . le chauffage de la surface de moulage ;
  . le dépôt d'une première couche de matériau thermoplastique de manière à former une couche recouvrante (26,50) ;
  . la fusion de la couche recouvrante (26,50) sur la surface en retrait (14-20,44) et la formation simultanée d'une fine membrane (26b,50b) sur le reste de la surface (12) ;
  . le refroidissement de la couche recouvrante y compris la fine membrane (26b,50b) du moule de façon à la séparer du (ou des) partie(s) recouvrante(s) (26a,50a) retenue(s) dans la surface en retrait (14,20,44) au niveau de la ligne de rupture brutale (24) ;
  . le réchauffement de l'outil (10,42) pour refondre partiellement la ou les partie(s) recouvrante(s) retenue(s) dans la surface en retrait (14,20,44) ;
  . le dépôt d'une couche de base de matériau thermoplastique sur l'ensemble de la surface du moule et sa liaison avec la ou les partie(s) recouvrante(s) retenue(s) (26a,50a) et ;
  . le refroidissement et le décollement du matériau thermoplastique lié de la surface du moule de façon qu'il forme un voile présentant un motif décoratif défini par la ou les partie(s) liée(s) (26a,50a) de matériau thermoplastique *in situ* dans la couche de base de matériau thermoplastique.

**2.** Procédé selon la revendication 1, caractérisé en ce que la surface en retrait (44) définit un motif piqué.

**3.** Procédé selon la revendication 1, caractérisé en ce que la surface en retrait (14,20) définit une succession de caractères entourés par une surface de plan de joint de moulage.

**4.** Procédé selon l'une quelconque des revendications précédentes, caractérisé en ce que la première couche de matériau thermoplastique est d'une couleur contrastant avec celle de la couche de base de matériau thermoplastique.

**5.** Procédé de formation d'un motif décoratif *in situ* dans une couche de base d'un matériau plastique dans un voile obtenu par application d'un matériau thermoplastique forcé contre un outil chauffé (10,42,60) comportant une surface de moulage (12), ce procédé comprenant :
  . la formation d'une surface (14-20,44,63) sur la surface de moulage correspondant au motif décoratif voulu ;
  . la formation d'une ligne de rupture brutale (24) entre cette surface (14-20,44,63) et le reste de la surface de moulage (56,58) ;
  . le dépôt d'une première couche (26,50,54,66) de matériau thermoplastique ; et
  . le chauffage de l'outil pour faire fondre le matériau thermoplastique sur la surface de moulage,

caractérisé en ce qu'il comprend en outre les étapes suivantes :

. le refroidissement de la première couche (26,50,64,66) de matériau ;

. le réchauffage de l'outil chauffable (10,42,60) pour refaire fondre partiellement la première couche de matériau (26,50,64,66) ;

. le dépôt d'une deuxième couche (70) de matériau thermoplastique de façon à recouvrir au moins une partie de la première couche (26,50,64,66) de matériau et à lier les première et deuxième couches ;

. le refroidissement et le décollement des première et deuxième couches de matériau thermoplastique de la surface de moulage de façon à former un voile présentant un motif décoratif défini par la première couche de matériau thermoplastique *in situ* avec la deuxième couche de matériau thermoplastique.

6. Procédé selon l'une quelconque des revendications précédentes, caractérisé en ce que la première couche (26,50) de matériau thermoplastique est déposée par pulvérisation d'une dispersion liquide du matériau thermoplastique sur la surface en retrait (14,20,44) et sur une étendue contiguë limitée de la surface de moulage, et en ce que la dispersion est traitée avant le décollement.

7. Procédé selon l'une quelconque des revendications précédentes, caractérisé en ce que la première couche de matériau thermoplastique est déposée sous forme de poudre sèche sur l'outil chauffé.

8. Procédé selon la revendication 5, caractérisé en ce que l'outil (60) est conformé de façon à présenter la surface décorative (63) sur un élément de séparation (62) entre une première et une deuxième partie (56,58) de la surface de moulage, une des couches de matériau thermoplastique étant déposée sur l'élément de séparation sous la forme d'une dispersion liquide qui est traitée pour former un motif décoratif d'une seule pièce avec l'autre couche (64,66) de matériau thermoplastique déposée sur les première et deuxième parties (56,58) de la surface de moulage.

FIG.1

36

38

40

D T C

FIG.2

26

4

14

22

18

20

12

16

10

4

FIG.3

12

24

24

28

28

26a

FIG.4

26b

12

26

12

26a

26a

10

FIG.5

FIG.8

FIG.6

FIG.9

FIG.7

FIG.10

## FIG. 11

```
FORM MOLD WITH
DECORATIVE RECESS
```
↓
```
HEAT MOLD AND
DEPOSIT FIRST
LAYER OF THERMO-
PLASTIC
```
↓
```
COOL MOLD AND
STRIP THIN
MEMBRANE
```
↓
```
REMELT DECORATIVE
FEATURE RETAINED
IN RECESS
```
↓
```
DEPOSIT SECOND
LAYER OF
THERMOPLASTIC
```
↓
```
COOL MOLD
AND STRIP SECOND
LAYER WITH
DECORATIVE
FEATURE
```

## FIG. 13

```
FORM MOLD WITH
DECORATIVE STITCH
```
↓
```
MASK MOLD
AT
STITCH
```
↓
```
DISTRIBUTE
LIQUID THERMO-
PLASTIC MATERIAL
ON STITCH
```
↓
```
CURE LIQUID
MATERIAL AND
STRIP MASK
```
↓
```
REMELT CURED
STITCH MATERIAL
AND
DISTRIBUTE
BASE LAYER
```
↓
```
COOL AND
STRIP
MOLD
```

## FIG. 12A

## FIG. 12B

## FIG. 14A

## FIG. 14B

## FIG. 14C